# EUROPEAN PATENT APPLICATION

(11) **EP 4 848 677 A1**
(43) Date of publication of application: **02.12.2026**
(21) Application number: 24925648.8
(22) Date of filing: 25.12.2024
(51) Int. Cl.: H04L 27/26

(54) **SIGNAL PROCESSING METHOD AND APPARATUS**

(30) Priority: 19.02.2024 CN 202410188075
(71) Applicant: HUAWEI TECHNOLOGIES CO., LTD., Shenzhen, Guangdong 518129 (CN)
(72) Inventor: MA, Qianli, Shenzhen, Guangdong 518129 (CN); HUANG, Huang, Shenzhen, Guangdong 518129 (CN); QU, Huiyang, Shenzhen, Guangdong 518129 (CN)
(74) Representative: Huawei European IPR
(86) International application number: PCT/CN2024/142305
(87) International publication number: WO 2025/175911

(57) **Abstract**

This application discloses a signal processing method and apparatus that can be used in an integrated sensing and communication scenario. Interference adding processing is performed on a first frequency-domain sub-signal and a second frequency-domain sub-signal in a first frequency-domain signal to obtain a second frequency-domain signal. A third frequency-domain sub-signal in the second frequency-domain signal is obtained by adding a first interference signal to the first frequency-domain sub-signal. A fourth frequency-domain sub-signal is obtained by adding a second interference signal to the second frequency-domain sub-signal. The first frequency-domain sub-signal and the second frequency-domain sub-signal are the same, and the first interference signal and the second interference signal are opposite; or the first frequency-domain sub-signal and the second frequency-domain sub-signal are opposite, and the first interference signal and the second interference signal are the same; or the first frequency-domain sub-signal and the second frequency-domain sub-signal are conjugate, and the first interference signal and the second interference signal are conjugate opposite; or the first frequency-domain sub-signal and the second frequency-domain sub-signal are conjugate opposite, and the first interference signal and the second interference signal are conjugate. The method can balance the enhancement of both sensing performance and communication performance of signals.

## Description

### CROSS-REFERENCE TO RELATED APPLICATIONS

This application claims priority to Chinese Patent Application No. 202410188075.0, filed with the China National Intellectual Property Administration on February 19, 2024 and entitled "SIGNAL PROCESSING METHOD AND APPARATUS", which is incorporated herein by reference in its entirety.

### TECHNICAL FIELD

This application relates to the communication field, and in particular, to a signal processing method and apparatus.

### BACKGROUND

Discrete fourier transform spread orthogonal frequency division multiplexing (discrete fourier transform spread orthogonal frequency division multiplexing, DFT-s-OFDM) signals exhibit a low peak to average power ratio (peak to average power ratio, PAPR), rendering the DFT-s-OFDM signals one of alternative waveforms for integrated sensing and communication (Integrated sensing and communication, ISAC).

However, frequency-domain signals of the DFT-s-OFDM signals suffer from large fluctuation (that is, the frequency-domain signals have a non-constant modulus). This causes noise signal energy to be amplified during sensing, thereby degrading sensing performance of the signals.

One solution involves performing an amplitude enhancement operation on frequency-domain signals with relatively low energy. Specifically, for example, an amplitude threshold is set. When an amplitude of a frequency-domain signal of a DFT-s-OFDM signal is lower than the amplitude threshold, the amplitude of the signal is changed to make the amplitude of the signal equal to the threshold. In this way, sensing performance of the signal can be improved. However, a higher amplitude threshold results in a greater loss to communication performance, which causes a relatively large loss to block error rate (block error rate, BLER) performance of a receiver.

How to balance the enhancement of both sensing performance and communication performance of signals is a technical problem that needs to be urgently resolved.

### SUMMARY

This application provides a signal processing method and apparatus, to balance the enhancement of both sensing performance and communication performance of signals, thereby satisfying an integrated sensing and communication (Integrated sensing and communication, ISAC) requirement.

According to a first aspect, a signal processing method is provided. The method may be performed by a first communication device. Unless otherwise specified, the "first communication device" in this application may refer to the first communication device (for example, a network device or a terminal device), may be a component (for example, a processor, a chip, or a chip system) in the first communication device, or may be a logic module or software that can implement all or a part of functions of the first communication device. The method includes: obtaining a first frequency-domain signal, where the first frequency-domain signal includes a plurality of frequency-domain sub-signals, the plurality of frequency-domain sub-signals include a first frequency-domain sub-signal and a second frequency-domain sub-signal, the first frequency-domain sub-signal is at a first subcarrier location, the second frequency-domain sub-signal is at a second subcarrier location, and the first subcarrier location and the second subcarrier location satisfy a preset relationship; performing interference adding processing on the first frequency-domain sub-signal and the second frequency-domain sub-signal to obtain a second frequency-domain signal, where the second frequency-domain signal includes a third frequency-domain sub-signal and a fourth frequency-domain sub-signal, the third frequency-domain sub-signal is obtained by adding a first interference signal to the first frequency-domain sub-signal, and the fourth frequency-domain sub-signal is obtained by adding a second interference signal to the second frequency-domain sub-signal; and outputting the second frequency-domain signal. Herein, the first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

In the foregoing solution, adding an interference signal to a frequency-domain signal (for example, a first frequency-domain signal) of a data signal means adding the interference signal based on a spectrum extension characteristic of the frequency-domain signal (for example, the first frequency-domain sub-signal and the second frequency-domain sub-signal are the same, and the interference signal (that is, the first interference signal) added to the first frequency-domain sub-signal and the interference signal (that is, the second interference signal) added to the second frequency-domain sub-signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other). In this way, when processing a signal obtained through interference adding, a receive end can separate a data signal from an interference signal, so that communication performance of signals is improved while sensing performance of the signals is improved, thereby better satisfying an ISAC requirement.

In a possible design, obtaining the first frequency-domain signal includes: performing quadrature amplitude modulation (quadrature amplitude modulation, QAM) processing on to-be-transmitted information bits to obtain the first time-domain signal, performing transform domain coding on the first time-domain signal to obtain the third frequency-domain signal, and performing spectrum extension processing on the third frequency-domain signal to obtain the first frequency-domain signal, where the first frequency-domain sub-signal and the second frequency-domain sub-signal are the same or opposite.

Correspondingly, performing interference adding processing on the first frequency-domain sub-signal and the second frequency-domain sub-signal to obtain the second frequency-domain signal may include: if the first frequency-domain sub-signal and the second frequency-domain sub-signal are the same, or the first frequency-domain sub-signal and the second frequency-domain sub-signal are opposite, performing interference adding processing on the first frequency-domain sub-signal and the second frequency-domain sub-signal when an amplitude of the first frequency-domain sub-signal or the second frequency-domain sub-signal is less than a first amplitude threshold.

In QAM modulation, one signal (in the extended bandwidth) of the second frequency-domain sub-signal and the first frequency-domain sub-signal is obtained by replicating the other signal (in the original bandwidth). Therefore, it may be determined only whether the amplitude of either of the second frequency-domain sub-signal and the first frequency-domain sub-signal is smaller than the first amplitude threshold. Certainly, in actual application, it may alternatively be determined whether the amplitudes of the first frequency-domain sub-signal and the second frequency-domain sub-signal are less than the first amplitude threshold. This is not limited.

In this design manner, signal interference adding reliability can be improved.

In a possible design, obtaining the first frequency-domain signal includes: performing offset quadrature amplitude modulation (offset quadrature amplitude modulation, OQAM) processing on to-be-transmitted information bits to obtain the first time-domain signal, and performing transform domain coding on the first time-domain signal to obtain the first frequency-domain signal, where the first frequency-domain sub-signal and the second frequency-domain sub-signal are conjugate or conjugate opposite.

Correspondingly, performing interference adding processing on the first frequency-domain sub-signal and the second frequency-domain sub-signal to obtain the second frequency-domain signal includes: if the first frequency-domain sub-signal and the second frequency-domain sub-signal are conjugate, or the first frequency-domain sub-signal and the second frequency-domain sub-signal are conjugate opposite, performing interference adding processing on the first frequency-domain sub-signal and the second frequency-domain sub-signal when amplitudes of the first frequency-domain sub-signal and the second frequency-domain sub-signal are less than a first amplitude threshold.

Because the second frequency-domain sub-signal and the first frequency-domain sub-signal are directly obtained through modulation in QAM modulation, it may be determined whether the amplitudes of the second frequency-domain sub-signal and the first frequency-domain sub-signal are both less than the first amplitude threshold.

In this design manner, signal interference adding reliability can be improved.

In a possible design, obtaining the first frequency-domain signal includes: performing cyclic shift processing on a first time-domain signal to obtain a second time-domain signal, and performing transform domain coding processing on the second time-domain signal to obtain the first frequency-domain signal. Correspondingly, after the second frequency-domain signal is obtained, phase rotation processing may be further performed on the second frequency-domain signal to obtain a third frequency-domain signal; and the third frequency-domain signal is output. Optionally, a value of the phase rotation is exp(j*π*k*n), n is an index of a subcarrier location of a frequency-domain sub-signal, and k is a preset rotation phase value.

According to the foregoing design, for the same signal, an interference adding manner of the signal in frequency domain may be changed through time domain cyclic shift and frequency domain phase shift, to improve flexibility of the interference adding manner; and for different signals, interference adding manners of the different signals in frequency domain may be the same through time domain cyclic shift and frequency domain phase shift, to reduce interference adding complexity.

In a possible design, in QAM modulation, if the first frequency-domain sub-signal and the second frequency-domain sub-signal are the same or opposite, the preset relationship is that the first subcarrier location and the second subcarrier location are spaced by N subcarriers, where N is a subcarrier quantity corresponding to the original bandwidth. The first subcarrier location is in the original bandwidth, and the second subcarrier location is in the extended bandwidth; or the second subcarrier location is in the original bandwidth, and the first subcarrier location is in the extended bandwidth.

In a possible design, in OQAM modulation, if the first frequency-domain sub-signal and the second frequency-domain sub-signal are conjugate or conjugate opposite, the preset relationship is that the first subcarrier location and the second subcarrier location are symmetric with respect to a (N/4)^{th} subcarrier location or a (3N/4)^{th} subcarrier location, where N is a subcarrier quantity corresponding to a transmission bandwidth.

In a possible design, the method further includes: obtaining the first amplitude threshold. For example, the first amplitude threshold is specified in a protocol, or the first amplitude threshold is configured by a network device. This is not limited.

In a possible design, the method further includes: determining the first interference signal and the second interference signal based on the first amplitude threshold, the first frequency-domain sub-signal, and the second frequency-domain sub-signal.

For example, if the first frequency-domain sub-signal and the second frequency-domain sub-signal are conjugate, the first amplitude threshold, the first frequency-domain sub-signal, and the first interference signal satisfy the following relationships: $real \left(z\right) = - \frac{imag \left(x\right)}{real \left(x\right)} imag \left(z\right) ;$ and $imag \left(z\right) = \pm \frac{\left|real\left(x\right)\right|}{\left|x\right|} \sqrt{{Th}^{2} - {x}^{2}} .$

Herein, *x* represents the first frequency-domain sub-signal, *z* represents the first interference signal, Th represents the first amplitude threshold, *real*(*z*) represents a real part of the first interference signal, *real*(*z*) represents an imaginary part of the first interference signal, *real*(*x*) represents a real part of the first frequency-domain sub-signal, and *imag*(*x*) represents an imaginary part of the first frequency-domain sub-signal.

In this example manner, it can be ensured that an amplitude of an interference signal is the smallest when the third frequency-domain sub-signal and the fourth frequency-domain sub-signal exceed the first amplitude threshold.

For example, if the first frequency-domain sub-signal and the second frequency-domain sub-signal are the same, the first amplitude threshold, the first frequency-domain sub-signal, the second frequency-domain sub-signal, the first interference signal, and the second interference signal satisfy the following relationships: $\left|x+z\right| \geq = Th ;$ and $\left|y-z\right| \geq = Th .$

Herein, *x* represents the first frequency-domain sub-signal, *z* represents the first interference signal, *y* represents the second frequency-domain sub-signal, and -*z* represents the second interference signal.

In this example manner, it can be ensured that the third frequency-domain sub-signal and the fourth frequency-domain sub-signal that are obtained through interference adding exceed the first amplitude threshold, thereby improving sensing performance of signals.

Certainly, the foregoing is merely some examples, and an actual manner of determining the interference signal is not limited thereto.

In a possible design, the first frequency-domain signal includes M frequency-domain sub-signals, M is a positive integer, and X pairs of frequency-domain sub-signals in the M frequency-domain sub-signals satisfy that the frequency-domain sub-signals are the same, opposite, conjugate, or conjugate opposite. The method may further include: performing interference adding processing on P pairs of frequency-domain sub-signals in the first frequency-domain signal, where $\frac{P}{X}$ or P is a preset value, and P is a positive integer less than or equal to X.

In specific implementation, $\frac{P}{X}$ or P may be specified in a protocol, agreed on by a system, or configured by a network device. This is not limited in this embodiment of this application.

In this design manner, an interference adding processing amount can be reduced as much as possible while sensing performance and communication performance of signals are improved, thereby reducing an interference adding workload of a transmitter and an interference cancellation workload of a receiver, to reduce device power consumption.

In a possible design, if one or more of the following conditions are satisfied, the method in the first aspect is performed:
(1) The first amplitude threshold reaches or exceeds a first value.
(2) An index of a modulation and coding scheme (modulation and coding scheme, MCS) corresponding to the first frequency-domain signal reaches or exceeds a second value.
(3) A code rate corresponding to the first frequency-domain signal reaches or exceeds a third value.
(4) A modulation order corresponding to the first frequency-domain signal reaches or exceeds a fourth value.

The first value, the second value, the third value, the fourth value, or the like may be specified in a protocol, agreed on by a system, or configured by a network device. This is not limited in this embodiment of this application.

In this way, negative effect (for example, communication performance further deteriorates) caused by implementing the solution in this embodiment of this application when an actual transmission condition of a channel is relatively poor can be avoided. In other words, the solution in this embodiment of this application can be implemented only when a channel condition is relatively good, thereby better improving sensing performance and communication performance of signals.

In a possible design, the method may further include: obtaining a fourth frequency-domain signal, where the fourth frequency-domain signal includes a fifth frequency-domain sub-signal and a sixth frequency-domain sub-signal, the fifth frequency-domain sub-signal is at a third subcarrier location, the sixth frequency-domain sub-signal is at a fourth subcarrier location, and the third subcarrier location and the fourth subcarrier location satisfy the preset relationship; performing interference adding processing on the fifth frequency-domain sub-signal and the sixth frequency-domain sub-signal to obtain a fifth frequency-domain signal, where the fifth frequency-domain signal includes a seventh frequency-domain sub-signal and an eighth frequency-domain sub-signal, the seventh frequency-domain sub-signal is obtained by adding a third interference signal to the fifth frequency-domain sub-signal, and the eighth frequency-domain sub-signal is obtained by adding a fourth interference signal to the sixth frequency-domain sub-signal; and outputting the fifth frequency-domain signal, where the fifth frequency-domain sub-signal and the sixth frequency-domain sub-signal are the same, and the third interference signal and the fourth interference signal are the same.

This design manner provides another interference adding manner, to improve flexibility of the interference adding manner.

In a possible design, an amplitude of the fifth frequency-domain sub-signal and/or an amplitude of the sixth frequency-domain sub-signal are/is less than or do/does not exceed a second amplitude threshold. In this way, interference adding can be performed only when the frequency-domain sub-signals in the fourth frequency-domain signal are less than the second amplitude threshold.

In a possible design, when one or more of the following conditions are satisfied, the another interference adding manner is used:
(1) The second amplitude threshold may be less than or equal to a fifth value.
(2) An index of an MCS corresponding to the fourth frequency-domain signal is less than or does not exceed a sixth value.
(3) A code rate corresponding to the fourth frequency-domain signal is less than or does not exceed a seventh value.
(4) A modulation order corresponding to the fourth frequency-domain signal is less than or does not exceed an eighth value.

The fifth value, the sixth value, the seventh value, the eighth value, or the like may be specified in a protocol, agreed on by a system, or configured by a network device. This is not limited in this embodiment of this application.

In this way, different interference adding manners can be flexibly used under different channel conditions, to satisfy requirements in different scenarios.

According to a second aspect, a signal processing method is provided. The method may be performed by a second communication device. Unless otherwise specified, the "second communication device" in this application may refer to the second communication device (for example, a terminal device or a network device), may be a component (for example, a processor, a chip, or a chip system) in the second communication device, or may be a logic module or software that can implement all or a part of functions of the second communication device. The method includes: receiving a first signal, where the first signal carries a second frequency-domain signal, the second frequency-domain signal includes a third frequency-domain sub-signal and a fourth frequency-domain sub-signal, the third frequency-domain sub-signal is obtained by adding a first interference signal to the first frequency-domain sub-signal, the fourth frequency-domain sub-signal is obtained by adding a second interference signal to the second frequency-domain sub-signal, the first frequency-domain sub-signal is at a first subcarrier location, the second frequency-domain sub-signal is at a second subcarrier location, and the first subcarrier location and the second subcarrier location satisfy a preset relationship; performing transform domain coding processing on the second frequency-domain signal to obtain a third time-domain signal; and performing extraction on the third time-domain signal to obtain a first time-domain signal. The first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

In the foregoing solution, the second communication device may separate a data signal from an interference signal by performing extraction on a time-domain signal, so that communication performance of signals is improved while sensing performance of the signals is improved, thereby better satisfying an ISAC requirement.

A QAM modulation scheme is used as an example. The second frequency-domain signal includes M frequency-domain sub-signals, M is a length of a transmission bandwidth, and M is a positive integer. Before transform domain coding processing is performed on the second frequency-domain signal, zero padding is performed on the second frequency-domain signal to obtain a padded second frequency-domain signal. The padded second frequency-domain signal includes 2N frequency-domain sub-signals. Herein, 2N is a positive integer greater than M, N is a subcarrier quantity corresponding to an original bandwidth, and N is a positive integer less than or equal to M. Performing extraction on the third time-domain signal to obtain the first time-domain signal includes: extracting signals at odd-numbered or even-numbered locations from the 2N frequency-domain sub-signals, where the N extracted signals form the first time-domain signal.

An OQAM modulation scheme is used as an example. The second frequency-domain signal includes 2N frequency-domain sub-signals, and 2N is a subcarrier quantity corresponding to a transmission bandwidth. In this case, performing extraction on the third time-domain signal to obtain the first time-domain signal includes: extracting real parts of signals at odd-numbered locations in the third time-domain signal, and extracting imaginary parts of signals at even-numbered locations in the third time-domain signal, where the 2N extracted signals form the first time-domain signal; or extracting imaginary parts of signals at odd-numbered locations in the third time-domain signal, and extracting real parts of signals at even-numbered locations in the third time-domain signal, where the 2N extracted signals form the first time-domain signal.

Certainly, the foregoing is merely two examples, and this application is not limited thereto in practice.

According to a third aspect, a communication apparatus is provided. The apparatus includes a module, a unit, or a technical means configured to perform the method according to the first aspect or any possible design of the first aspect.

For example, the apparatus may include:
a processing module, configured to: obtain a first frequency-domain signal, where the first frequency-domain signal includes a plurality of frequency-domain sub-signals, the plurality of frequency-domain sub-signals include a first frequency-domain sub-signal and a second frequency-domain sub-signal, the first frequency-domain sub-signal is at a first subcarrier location, the second frequency-domain sub-signal is at a second subcarrier location, and the first subcarrier location and the second subcarrier location satisfy a preset relationship; and perform interference adding processing on the first frequency-domain sub-signal and the second frequency-domain sub-signal to obtain a second frequency-domain signal, where the second frequency-domain signal includes a third frequency-domain sub-signal and a fourth frequency-domain sub-signal, the third frequency-domain sub-signal is obtained by adding a first interference signal to the first frequency-domain sub-signal, and the fourth frequency-domain sub-signal is obtained by adding a second interference signal to the second frequency-domain sub-signal; and
an input/output module, configured to output the second frequency-domain signal.

The first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

According to a fourth aspect, a communication apparatus is provided. The apparatus includes a module, a unit, or a technical means configured to perform the method according to the second aspect or any possible design of the second aspect.

For example, the apparatus may include:
an input/output module, configured to receive a first signal, where the first signal carries a second frequency-domain signal, the second frequency-domain signal includes a third frequency-domain sub-signal and a fourth frequency-domain sub-signal, the third frequency-domain sub-signal is obtained by adding a first interference signal to the first frequency-domain sub-signal, the fourth frequency-domain sub-signal is obtained by adding a second interference signal to the second frequency-domain sub-signal, the first frequency-domain sub-signal is at a first subcarrier location, the second frequency-domain sub-signal is at a second subcarrier location, and the first subcarrier location and the second subcarrier location satisfy a preset relationship; and
a processing module, configured to: perform transform domain coding processing on the second frequency-domain signal to obtain a third time-domain signal; and perform extraction on the third time-domain signal to obtain a first time-domain signal.

The first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

According to a fifth aspect, a communication apparatus is provided. The apparatus includes a processor and an interface circuit. The interface circuit is electrically coupled to the processor. The processor performs, by using a logic circuit or by executing code instructions, the method according to the first aspect or any possible design of the first aspect or the method according to the second aspect or any possible design of the second aspect.

According to a sixth aspect, a communication apparatus is provided, including: at least one processor, and a communication interface that is communicatively connected to the at least one processor. The at least one processor executes instructions stored in a memory, so that the communication apparatus is enabled to perform, by using the communication interface, the method according to the first aspect or any possible design of the first aspect, or the method according to the second aspect or any possible design of the second aspect.

According to a seventh aspect, a computer-readable storage medium is provided. The storage medium stores a computer program or instructions. When the computer program or the instructions are run, the method according to the first aspect or any possible design of the first aspect is performed, or the method according to the second aspect or any possible design of the second aspect is performed.

According to an eighth aspect, a computer program product is provided, including instructions. When the instructions are run on a computer, the method according to the first aspect or any possible design of the first aspect is performed, or the method according to the second aspect or any possible design of the second aspect is performed.

According to a ninth aspect, a communication system is provided, including a first communication apparatus and a second communication apparatus. The first communication apparatus is configured to perform the method according to the first aspect or any possible design of the first aspect, and the second communication apparatus is configured to perform the method according to the second aspect or any possible design of the second aspect.

For specific designs and beneficial effects of the third aspect to the ninth aspect, refer to the corresponding designs and beneficial effects in the first aspect and the second aspect.

### BRIEF DESCRIPTION OF DRAWINGS

FIG. 1 is a flowchart of processing a DFT-s-OFDM signal by a transmitter and a receiver;
FIG. 2 is a diagram of a network architecture of a communication system to which an embodiment of this application is applicable;
FIG. 3 is a flowchart of a signal processing method according to an embodiment of this application;
FIG. 4A is a diagram of performing FDSS processing on a QAM signal;
FIG. 4B is a diagram of an OQAM signal;
FIG. 5 is a flowchart of another signal processing method according to an embodiment of this application;
FIG. 6A is a diagram of a data signal and an interference signal in a QAM modulation scheme;
FIG. 6B is a diagram of a data signal and an interference signal in an OQAM modulation scheme;
FIG. 7 is a flowchart of another signal processing method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of another communication apparatus according to an embodiment of this application.

### DESCRIPTION OF EMBODIMENTS

In embodiments of this application, a plurality of means two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in embodiments of the present invention to describe objects, these objects are not limited by these terms. The terms are merely used for distinguishing the objects from each other.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a relevant concept in a specific manner.

In embodiments of this application, single-carrier refers to convolving serially arranged transmit signals to a roll-off filter to form a transmit signal; and multi-carrier refers to arranging transmit signals in parallel and forming a transmit signal through inverse fast fourier transform (inverse fast Fourier transform, IFFT).

The single-carrier signal may be a single-carrier quadrature amplitude modulation (single-carrier quadrature amplitude modulation, SC-QAM) signal, and the multi-carrier signal may be an orthogonal frequency division multiplexing (orthogonal frequency division multiplexing, OFDM) signal. In addition, a discrete fourier transform spread orthogonal frequency division multiplexing (discrete fourier transform spread orthogonal frequency division multiplexing, DFT-s-OFDM) signal is almost equivalent to a conventional single-carrier signal; but the DFT-s-OFDM adopts a multi-carrier implementation, and therefore is easy to be compatible with OFDM. The DFT-s-OFDM signal may also be considered to be single-carrier.

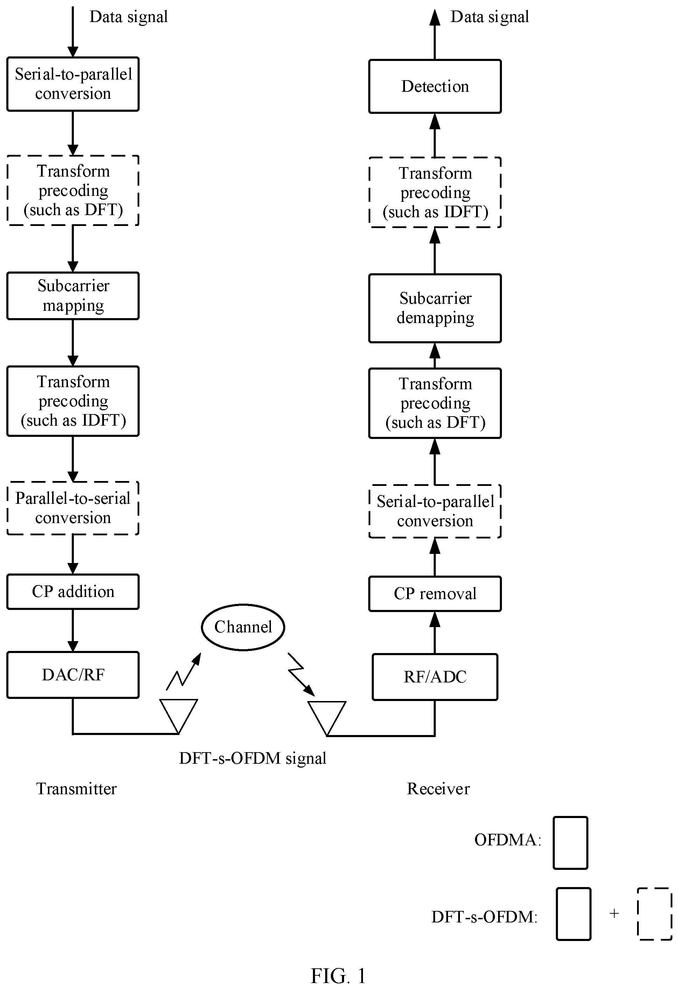

FIG. 1 is a flowchart of signal processing by a transmitter and a receiver when a DFT-s-OFDM signal is used for communication.

As shown in FIG. 1, the transmitter sequentially performs operations such as serial-to-parallel conversion, transform domain coding (for example, discrete fourier transform (discrete fourier transform, DFT)), subcarrier mapping (for example, mapping to a resource element (resource element, RE)), transform domain coding (for example, inverse discrete fourier transform (discrete fourier transform, DFT)), cyclic prefix (cyclic prefix, CP) addition, and digital-to-analog conversion (DAC) on a to-be-sent data signal (single-carrier), to obtain a DFT-s-OFDM signal, and sends the DFT-s-OFDM signal through a channel.

The receiver has a process opposite to the transmitter. For example, after obtaining the DFT-s-OFDM signal, the receiver sequentially performs analog-to-digital conversion (ADC), CP removal, serial-to-parallel conversion, transform domain coding (such as DFT), subcarrier demapping, transform domain coding (such as IDFT), and parallel-to-serial conversion on the signal. In this way, the receiver can restore the data signal, and then perform detection on the data signal.

It may be understood that the related operations in FIG. 1 are merely used as an example. Optionally, the method may further include another possible operation, for example, at least one of frequency domain spectral shaping, power amplification, and low noise amplification.

DFT-s-OFDM signals exhibit a very low PAPR, rendering the DFT-s-OFDM signals one of alternative signals for integrated sensing and communication. However, frequency-domain signals of the DFT-s-OFDM signals suffer from large fluctuation (that is, the frequency-domain signals have a non-constant modulus). This causes noise signal energy to be amplified during sensing, thereby degrading sensing performance. One solution is a floor clipping (for example, floor clipping in English) solution based on a DFT-s-OFDM signal. To be specific, an amplitude enhancement operation is performed on a frequency-domain signal with relatively low energy. For example, amplitude enhancement is performed according to the following formula: $\left\{\begin{matrix}X \left(n\right) = Th \times {e}^{j 2 π \times angle \left(X\left(n\right)\right)} & if \left|X\left(n\right)\right| < Th \\ X \left(n\right) = X \left(n\right) & if \left|X\left(n\right)\right| \geq Th\end{matrix}\right. .$

To be specific, an amplitude threshold Th is set. When an amplitude of a frequency-domain signal is lower than the amplitude threshold, a phase of the frequency-domain signal is not changed, and the amplitude of the frequency-domain signal is changed to make the amplitude of the frequency-domain signal equal to the amplitude threshold Th. In this way, sensing performance of the signal can be improved.

A higher amplitude threshold Th indicates more signals to which interference signals are to be added. However, the receiver cannot distinguish a data signal from an interference signal in received signals. Therefore, a higher threshold Th means a greater block error rate (block error rate, BLER) of the receiver and a greater communication performance loss.

To resolve the foregoing one or more technical problems, a signal processing and apparatus provided in embodiments of this application can balance the enhancement of both sensing performance and communication performance of signals, to satisfy an ISAC requirement.

The technical solutions in embodiments of this application may be applied to various communication systems, for example, a 5th generation (5th generation, 5G) mobile communication system such as a new radio (new radio, NR) system, a 6th generation (6th generation, 6G) mobile communication system, a universal mobile telecommunications system (universal mobile telecommunications system, UMTS), a wireless local area network (wireless local area network, WLAN), a wireless fidelity (wireless fidelity, Wi-Fi) system, and another future evolved communication system.

Embodiments of this application may be applied to the following scenarios: enhanced mobile broadband (enhanced mobile broadband, eMBB), multi-site transmission (a same terminal device transmits signals to a plurality of sites), a backhaul scenario, wireless to the x (wireless to the x, WTTx), device-to-device (device-to-device, D2D), or machine-type communication (machine-type communication, MTC).

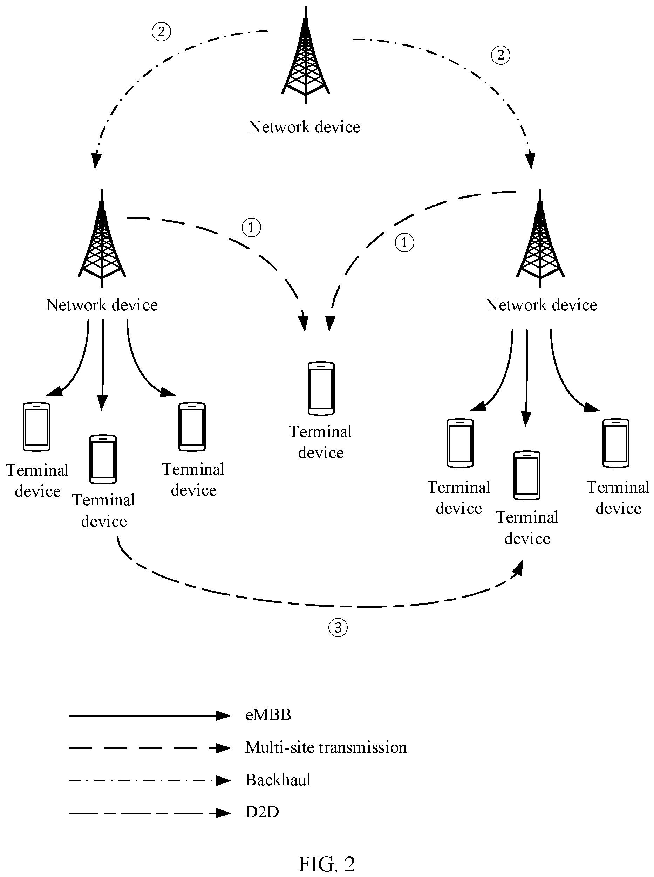

For example, FIG. 2 is a diagram of a communication system to which an embodiment of this application is applicable. As shown in FIG. 2, the communication system may include one or more network devices and one or more terminal devices. An interface between the network device and the terminal device may be a Uu interface (or referred to as an air interface), and data transmission may be performed between the network device and the terminal device via an air interface resource.

FIG. 2 shows examples of scenarios to which embodiments of this application are applicable: eMBB (shown by solid lines in FIG. 2), multi-site transmission (shown by dashed lines ① in FIG. 2), a backhaul scenario (shown by dashed lines ② in FIG. 2), and D2D (shown by a dashed line ③ in FIG. 2). It should be understood that four scenarios shown in FIG. 2 are merely examples. This is not limited in this embodiment of this application.

The network device may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU) or a distributed unit (distributed unit, DU). An access network device may be a macro base station (for example, 110a in FIG. 2), may be a micro base station or an indoor base station (for example, 110b in FIG. 2), or may be a relay node, a donor node, or the like. Neither of a specific technology and a specific device form that are used by the access network device is limited in embodiments of this application. In this embodiment of this application, an example in which the base station serves as the access network device is used for description.

In a possible scenario, a plurality of RAN nodes coordinate to assist a terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP) or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, O-RAN, open RAN, or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, remote medical, smart grid, smart home, smart office, smart wearable, smart transportation, and smart city. The terminal device may be a mobile phone, a tablet computer, a computer having wireless transmission and reception functions, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The base station and the UE may be at fixed locations, or may be movable. The base station and the UE may be deployed on land, including an indoor or outdoor scenario, and a handheld or vehicle-mounted scenario; or may be deployed on water; or may be deployed on an airplane, a balloon, or an artificial satellite in the air. Application scenarios of the base station and the UE are not limited in embodiments of this application.

Communication between a base station and UE, between base stations, and between UE and UE may be performed through a licensed spectrum, may be performed through an unlicensed spectrum, or may be performed through both a licensed spectrum and an unlicensed spectrum; or may be performed through a spectrum below 6 gigahertz (gigahertz, GHz), may be performed through a spectrum above 6 GHz, or may be performed through both a spectrum below 6 GHz and a spectrum above 6 GHz. A spectrum resource used for wireless communication is not limited in embodiments of this application.

It may be understood that the communication system and the scenario described in embodiments of this application are intended to describe the technical solutions in embodiments of this application more clearly, and do not constitute a limitation on the technical solutions provided in embodiments of this application. A person of ordinary skill in the art may learn that with evolution of a network architecture and emergence of new scenarios, the technical solutions provided in embodiments of this application are also applicable to similar technical problems.

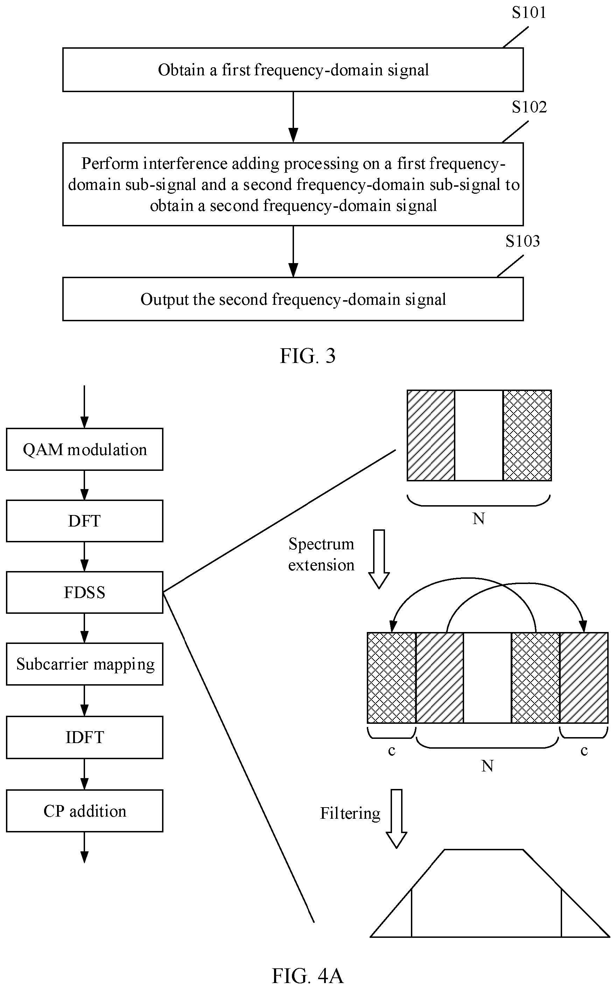

FIG. 3 is a flowchart of a signal processing method according to an embodiment of this application. The method may be applied to the communication system shown in FIG. 2. The method may be performed by a first communication device. Unless otherwise specified, the "first communication device" in this application may refer to the first communication device (for example, the network device or the terminal device shown in FIG. 2), may be a component (for example, a processor, a chip, or a chip system) in the first communication device, or may be a logic module or software that can implement all or a part of functions of the first communication device. The method includes S101 to S103.

S101: Obtain a first frequency-domain signal.

The first frequency-domain signal includes a plurality of frequency-domain sub-signals. Each frequency-domain sub-signal corresponds to one subcarrier location.

At least a part of signals in the first frequency-domain signal have a spectrum extension characteristic. For example, the plurality of frequency-domain sub-signals include a first frequency-domain sub-signal and a second frequency-domain sub-signal. The first frequency-domain sub-signal is at a first subcarrier location, and the second frequency-domain sub-signal is at a second subcarrier location. The first subcarrier location and the second subcarrier location satisfy a preset relationship. The first frequency-domain sub-signal and the second frequency-domain sub-signal are same signals, opposite signals, conjugate signals, or conjugate opposite signals to each other.

In a possible implementation, quadrature amplitude modulation (quadrature amplitude modulation, QAM) processing may be performed on to-be-transmitted information bits to obtain a first time-domain signal, transform domain coding (for example, discrete fourier transform (discrete fourier transform, DFT)) may be performed on the first time-domain signal to transform the first time-domain signal to frequency domain and obtain a third frequency-domain signal, and frequency domain spectral shaping (frequency domain spectral shaping, FDSS) processing may be performed on the third frequency-domain signal to obtain the first frequency-domain signal.

In specific implementation, FDSS may include spectrum extension. Optionally, FDSS may further include filtering. For example, FIG. 4A is a diagram of FDSS processing. After performing DFT on the first time-domain signal to obtain the third frequency-domain signal, a transmitter performs spectrum extension (from N subcarriers to N+2c subcarriers) on the third frequency-domain signal, and then uses a filter to multiply the extended part of signals, to achieve frequency domain spectral shaping effect. Filtering is an optional step.

The following is an example of spectrum extension.

It is assumed that the first time-domain signal is x = [a₁ a₂ a₃ ... a*_{N}*], where a₁, a₂, a₃, ..., and a*_{N}* are QAM modulation signals, N is a subcarrier quantity corresponding to an original bandwidth, and N is a positive integer.

The third frequency-domain signal obtained by performing DFT on the first time-domain signal is: Y = DFT(x) = [b₁ b₂ b₃ ... b*_{N}*].

A specific manner of performing spectrum extension on the third frequency-domain signal is: replicating first c signals of Y and placing the first c signals at the end of Y, and replicating last c signals of Y and placing the last c signals at the front of Y, to obtain a frequency-domain signal (that is, the first frequency-domain signal) obtained through spectrum extension: Z = [*b_{N-c} b*_{*N-c*+1} ... b*_{c}* b₁ b₂ b₃ ... b*_{N}* b₁ b₂ b₃ ... b*_{c}*], where c is a positive integer. Herein, 2c/N is a spectrum extension bandwidth ratio, and a value of 2c/N may be predefined in a protocol, for example, 20%, 30%, 50%, or 100%. A subcarrier quantity after spectrum extension is M = 2c + N, that is, a subcarrier quantity corresponding to an actual transmission bandwidth.

For ease of understanding, a signal on the original bandwidth may be referred to as an original signal, and a signal on the extended bandwidth is obtained by replicating a signal on the original bandwidth and may be referred to as a replica signal.

In Z, amplitudes of each replica signal and a signal on which replication is performed and that corresponds to each replica signal are the same or opposite (that is, the replica signal and the signal on which replication is performed are same signals or opposite signals to each other). For example, a (c+N+1)^{th} signal in Z is a replica signal of a (c+1)^{th} signal (in other words, the (c+1)^{th} signal in Z is a signal on which replication is performed and that corresponds to the (c+N+1)^{th} signal), and both are b1. It can be learned that a spacing between each replica signal and a signal on which replication is performed and that corresponds to the replica signal is N signals, and a spacing between corresponding subcarrier locations is 2.

Correspondingly, in the QAM modulation scheme, when the first frequency-domain sub-signal and the second frequency-domain sub-signal are the same or opposite, the satisfied preset relationship between the first subcarrier location and the second subcarrier location is that the first subcarrier location and the second subcarrier location are spaced by N subcarriers, where N is a subcarrier quantity corresponding to the original bandwidth. The first subcarrier location is in the original bandwidth, and the second subcarrier location is in the extended bandwidth; or the second subcarrier location is in the original bandwidth, and the first subcarrier location is in the extended bandwidth. This is not limited.

In another possible implementation, offset quadrature amplitude modulation (offset quadrature amplitude modulation, OQAM) processing may be performed on to-be-transmitted information bits to obtain the first time-domain signal; and transform domain coding (for example, DFT) may be performed on the first time-domain signal to transform the first time-domain signal to frequency domain and obtain the first frequency-domain signal. It may be understood that a real part of a constellation symbol obtained through OQAM processing is separated from an imaginary part of the constellation symbol. For example, a π/2-binary phase shift keying (binary phase shift keying, BPSK) signal defined in a protocol is a signal whose real part is separated from an imaginary part.

In this case, a signal (that is, the first frequency-domain signal) obtained through OQAM processing has a spectrum extension characteristic (that is, spectrum extension does not need to be performed). For example, if a transmission bandwidth of the first frequency-domain signal is N, there are two symmetry points on the entire transmission bandwidth, for example, an (N/4)^{th} subcarrier location and a (3N/4)^{th} subcarrier location. Two signals that are symmetric with respect to the (N/4)^{th} subcarrier location or the (3N/4)^{th} subcarrier location are conjugate signals or conjugate opposite signals to each other.

The following uses an OQAM signal as an example.

It is assumed that the first time-domain signal is x = [a₁ a₂ a₃ ... a*_{N}*], where a₁, a₂, a₃, ..., and a*_{N}* are OQAM modulation signals, a phase difference between two adjacent signals is 90°, N is a subcarrier quantity corresponding to an original bandwidth, and N is a positive integer.

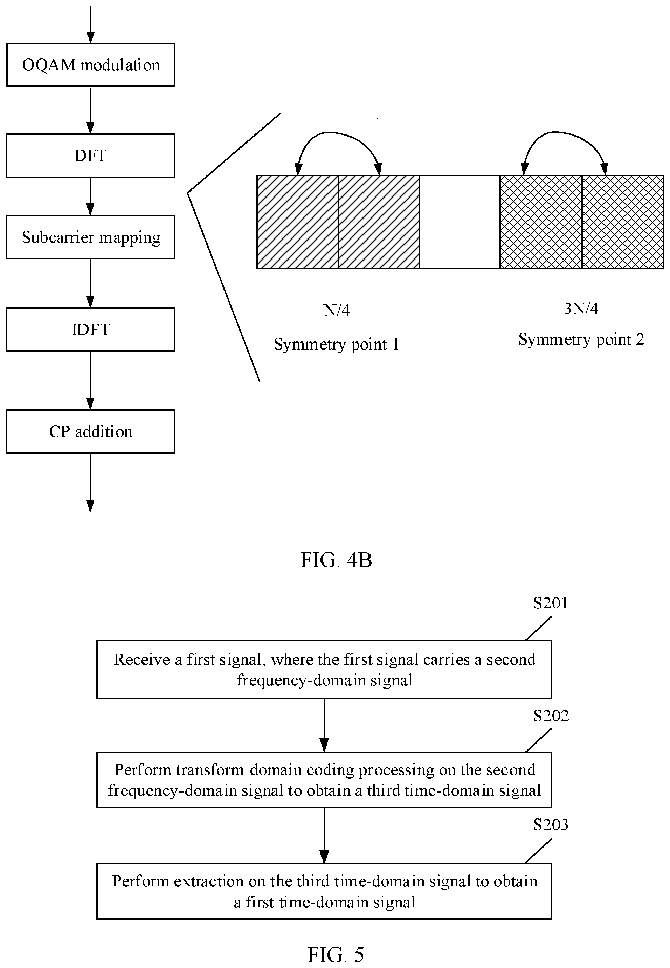

A first frequency-domain signal obtained by performing DFT on the first time-domain signal is: Y = DFT(x) = [b₁ b₂ b₃ ... b*_{N}*]. The frequency-domain signal has a spectrum extension characteristic (spectrum extension does not need to be performed). The characteristic of the frequency-domain signal is shown in FIG. 4B.

There are two symmetry points on the entire bandwidth, for example, N/4 and 3N/4 in FIG. 4B. With respect to the symmetry points, signals satisfy a conjugate relationship or a conjugate opposite relationship. For example, b_{*N*/4-1} = *conj*(b_{*N*/4+1}), b_{*N*/4-2} = conj(b_{*N*/4+2}), b_{3*N*/4-1} = *conj*(b_{3*N*/4+1} ), and b_{3*N*/4-2} = conj(b_{3*N*/4+2}).

Correspondingly, in an OQAM modulation scheme, the first frequency-domain sub-signal and the second frequency-domain sub-signal are conjugate or conjugate opposite, and the preset relationship is that the first subcarrier location and the second subcarrier location are symmetric with respect to the (N/4)^{th} subcarrier location or the (3N/4)^{th} subcarrier location, where N is a subcarrier quantity corresponding to a transmission bandwidth.

It may be understood that the first frequency-domain signal is a signal without interference adding, and the second frequency-domain signal is a frequency-domain signal obtained through interference adding. For ease of description, the signal without interference adding is referred to as a data signal (for example, the first frequency-domain signal is a frequency-domain signal of the data signal) in this specification.

S102: Perform interference adding processing on the first frequency-domain sub-signal and the second frequency-domain sub-signal to obtain a second frequency-domain signal.

In the first frequency-domain signal, if subcarrier locations of two frequency-domain sub-signals satisfy the foregoing preset relationship, and the two frequency-domain sub-signals have a spectrum extension characteristic, a property between two interference signals added to the two frequency-domain sub-signals is opposite to a property between the two frequency-domain sub-signals.

The first frequency-domain sub-signal and the second frequency-domain sub-signal are used as an example. A first interference signal is added to the first frequency-domain sub-signal to obtain a third frequency-domain sub-signal, and a second interference signal is added to the second frequency-domain sub-signal to obtain a fourth frequency-domain sub-signal. The second frequency-domain signal includes the third frequency-domain sub-signal and the fourth frequency-domain sub-signal. In this case, the first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

The first frequency-domain sub-signal and the second frequency-domain sub-signal being the same means that the two signals have same amplitudes and same phases.

The first frequency-domain sub-signal and the second frequency-domain sub-signal being opposite means that the first frequency-domain sub-signal and the second frequency-domain sub-signal have same amplitudes and a phase difference of π (that is, 180 degrees); or that at a same phase, an amplitude of the first frequency-domain sub-signal is an opposite number or a negative number of an amplitude of the second frequency-domain sub-signal.

The first frequency-domain sub-signal and the second frequency-domain sub-signal being conjugate means that when the first frequency-domain sub-signal and the second frequency-domain sub-signal are expressed in a complex number form, real parts of the two signals are the same, and imaginary parts of the two signals are opposite.

The first frequency-domain sub-signal and the second frequency-domain sub-signal being conjugate opposite means that when the first frequency-domain sub-signal and the second frequency-domain sub-signal are expressed in a complex number form, real parts of the two signals are opposite, and imaginary parts of the two signals are the same.

It may be understood that the foregoing uses the first frequency-domain sub-signal and the second frequency-domain sub-signal as an example, and if subcarrier locations of other frequency-domain sub-signals in the first frequency-domain signal satisfy the preset relationship, the other frequency-domain sub-signals have a spectrum extension characteristic, amplitudes of the other frequency-domain sub-signals are less than a first amplitude threshold, and the like, interference adding processing may also be performed based on interference adding manners of the first frequency-domain sub-signal and the second frequency-domain sub-signal. In other words, in addition to the third frequency-domain sub-signal and the fourth frequency-domain sub-signal, the second frequency-domain signal may further include more frequency-domain sub-signals on which interference adding is performed in the foregoing interference adding manner.

In a possible implementation, if a modulation scheme is QAM, performing interference adding processing on the first frequency-domain sub-signal and the second frequency-domain sub-signal may include: if the first frequency-domain sub-signal and the second frequency-domain sub-signal are the same, or the first frequency-domain sub-signal and the second frequency-domain sub-signal are opposite, performing interference adding processing on the first frequency-domain sub-signal and the second frequency-domain sub-signal when an amplitude of the first frequency-domain sub-signal and/or an amplitude of the second frequency-domain sub-signal are/is less than a first amplitude threshold.

In QAM modulation, one signal (in the extended bandwidth) of the second frequency-domain sub-signal and the first frequency-domain sub-signal is obtained by replicating the other signal (in the original bandwidth). Therefore, it may be determined only whether the amplitude of either of the second frequency-domain sub-signal and the first frequency-domain sub-signal is smaller than the first amplitude threshold. In other words, provided that it is determined that the amplitude of either of the first frequency-domain sub-signal and the second frequency-domain sub-signal is less than the first amplitude threshold, interference adding processing may be performed on the first frequency-domain sub-signal and the second frequency-domain sub-signal.

Certainly, in actual application, it may alternatively be determined whether the amplitudes of the first frequency-domain sub-signal and the second frequency-domain sub-signal are less than the first amplitude threshold. This is not limited.

In another possible implementation, if a modulation scheme is OQAM, performing interference adding processing on the first frequency-domain sub-signal and the second frequency-domain sub-signal may include: if the first frequency-domain sub-signal and the second frequency-domain sub-signal are conjugate, or the first frequency-domain sub-signal and the second frequency-domain sub-signal are conjugate opposite, performing interference adding processing on the first frequency-domain sub-signal and the second frequency-domain sub-signal when amplitudes of the first frequency-domain sub-signal and the second frequency-domain sub-signal are less than a first amplitude threshold.

Because the second frequency-domain sub-signal and the first frequency-domain sub-signal are directly obtained through modulation in QAM modulation, it may be determined whether the amplitudes of the second frequency-domain sub-signal and the first frequency-domain sub-signal are both less than the first amplitude threshold.

The first amplitude threshold needs to be first obtained before it is determined that the amplitude of the first frequency-domain sub-signal and/or the amplitude of the second frequency-domain sub-signal are/is less than the first amplitude threshold.

In a possible implementation, the first amplitude threshold is specified in a protocol, and the first communication device may determine the first amplitude threshold according to the protocol.

In another possible implementation, the first amplitude threshold is configured by the network device. For example, when the first communication device is a terminal device, the first communication device may receive configuration information from the network device, and determine the first amplitude threshold based on the configuration information. For example, when the first communication device is a network device, the first communication device may send configuration information to a terminal device, so that the terminal device can determine the first amplitude threshold based on the configuration information.

In a possible design, before performing interference adding processing on the first frequency-domain sub-signal and the second frequency-domain sub-signal, the first communication device may determine the first interference signal and the second interference signal based on the first amplitude threshold, the first frequency-domain sub-signal, and the second frequency-domain sub-signal.

For example, QAM modulation is used as an example. If the first frequency-domain sub-signal and the second frequency-domain sub-signal are the same, the first interference signal and the second interference signal may be determined according to Formula (1) and Formula (2) below: $\left|x+z\right| \geq = Th$ (1) $\left|y-z\right| \geq = Th$ (2)

Herein, *x* represents the first frequency-domain sub-signal, *z* represents the first interference signal, *y* represents the second frequency-domain sub-signal, *-z* represents the second interference signal, and *Th* represents the first amplitude threshold.

If the first frequency-domain sub-signal and the second frequency-domain sub-signal are opposite, the first interference signal and the second interference signal may be determined according to Formula (3) and Formula (4) below: $\left|x+z\right| \geq = Th$ (3) $\left|y+z\right| \geq = Th$ (4)

Herein, *x* represents the first frequency-domain sub-signal, *y* represents the second frequency-domain sub-signal, *z* represents the first interference signal and the second interference signal, and *Th* represents the first amplitude threshold.

In this way, it can be ensured that the third frequency-domain sub-signal and the fourth frequency-domain sub-signal that are obtained through interference adding exceed the first amplitude threshold, thereby improving sensing performance of signals.

For example, OQAM modulation is used as an example. If the first frequency-domain sub-signal and the second frequency-domain sub-signal are conjugate, the first interference signal and the second interference signal may be determined according to Formula (5) and Formula (6) below: $real \left(z\right) = - \frac{imag \left(x\right)}{real \left(x\right)} imag \left(z\right)$ (5) $imag \left(z\right) = \pm \frac{\left|real\left(x\right)\right|}{\left|x\right|} \sqrt{{Th}^{2} - {x}^{2}}$ (6)

Herein, *x* represents the first frequency-domain sub-signal, *z* represents the first interference signal, Th represents the first amplitude threshold, *real*(*z*) represents a real part of the first interference signal, *real*(*z*) represents an imaginary part of the first interference signal, *real*(*x*) represents a real part of the first frequency-domain sub-signal, and *imag*(*x*) represents an imaginary part of the first frequency-domain sub-signal.

Formula (5) and Formula (6) may be obtained by calculating an optimal solution of z based on Formula (7), Formula (8), and Formula (9) below: $argmin \left|z\right|$ (7) $\left|x+z\right| \geq = Th$ (8) $\left|y+\left(-z∗\right)\right| \geq = Th$ (9)

In this way, it can be ensured that an amplitude of an interference signal is the smallest when the third frequency-domain sub-signal and the fourth frequency-domain sub-signal exceed the first amplitude threshold.

S103: Output the second frequency-domain signal.

It may be understood that outputting the second frequency-domain signal may mean outputting the second frequency-domain signal to a next processing node of the transmitter, for example, subcarrier mapping; or may mean sending the second frequency-domain signal through a channel after processing such as subcarrier mapping, inverse fourier transform, and CP addition.

In the foregoing solution, adding an interference signal to a frequency-domain signal means adding the interference signal based on a spectrum extension characteristic of the frequency-domain signal (for example, the first frequency-domain sub-signal and the second frequency-domain sub-signal are the same, and the interference signal (that is, the first interference signal) added to the first frequency-domain sub-signal and the interference signal (that is, the second interference signal) added to the second frequency-domain sub-signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other). In this way, when processing a signal obtained through interference adding, a receive end can separate a data signal from an interference signal, so that communication performance of signals is improved while sensing performance of the signals is improved, thereby better satisfying an ISAC requirement.

The following describes a method for processing the second frequency-domain signal at a receive end.

FIG. 5 is a flowchart of another signal processing method according to an embodiment of this application. The method may be applied to the communication system shown in FIG. 2. The method may be performed by a first communication device and a second communication device. Unless otherwise specified, the "second communication device" in this application may refer to the second communication device (for example, the terminal device or the network device shown in FIG. 2), may be a component (for example, a processor, a chip, or a chip system) in the second communication device, or may be a logic module or software that can implement all or a part of functions of the second communication device. The method includes S201 to S203.

S201: Receive a first signal, where the first signal carries a second frequency-domain signal.

It may be understood that the first signal may be a signal received by the second communication device on an air interface, or may be a signal obtained by performing some processing (such as analog-to-digital conversion and CP removal) on a signal received on an air interface. This is not limited.

The second frequency-domain signal corresponds to the second frequency-domain signal in S102. For example, the second frequency-domain signal includes a third frequency-domain sub-signal and a fourth frequency-domain sub-signal, the third frequency-domain sub-signal is obtained by adding a first interference signal to a first frequency-domain sub-signal, the fourth frequency-domain sub-signal is obtained by adding a second interference signal to a second frequency-domain sub-signal, the first frequency-domain sub-signal is at a first subcarrier location, the second frequency-domain sub-signal is at a second subcarrier location, and the first subcarrier location and the second subcarrier location satisfy a preset relationship. The first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

S202: Perform transform domain coding processing on the second frequency-domain signal to obtain a third time-domain signal.

It may be understood that transform domain coding processing is used to transform the second frequency-domain signal from frequency domain to time domain, and a specific method is, for example, IDFT. The obtained third time-domain signal includes a data signal and an interference signal.

S203: Perform extraction on the third time-domain signal to obtain a first time-domain signal.

It may be understood that manners of performing extraction on the third time-domain signal are different in different modulation schemes.

In an example, for a QAM modulation scheme, it is assumed that the second frequency-domain signal includes M frequency-domain sub-signals, M is a length of a transmission bandwidth, and M is a positive integer. Before transform domain coding processing is performed on the second frequency-domain signal, if M<2N, zero padding may be further performed on the second frequency-domain signal to obtain a padded second frequency-domain signal. The padded second frequency-domain signal includes 2N frequency-domain sub-signals. Herein, 2N is a positive integer greater than M, N is a subcarrier quantity corresponding to an original bandwidth, and N is a positive integer less than or equal to M. Correspondingly, performing extraction on the third time-domain signal to obtain the first time-domain signal includes: extracting signals at odd-numbered or even-numbered locations from the 2N frequency-domain sub-signals, where the N extracted signals form the first time-domain signal. It may be understood that whether a signal at an odd-numbered location or an even-numbered location is extracted is related to a relationship (same or opposite) between an original signal and a replica signal in the second frequency-domain signal.

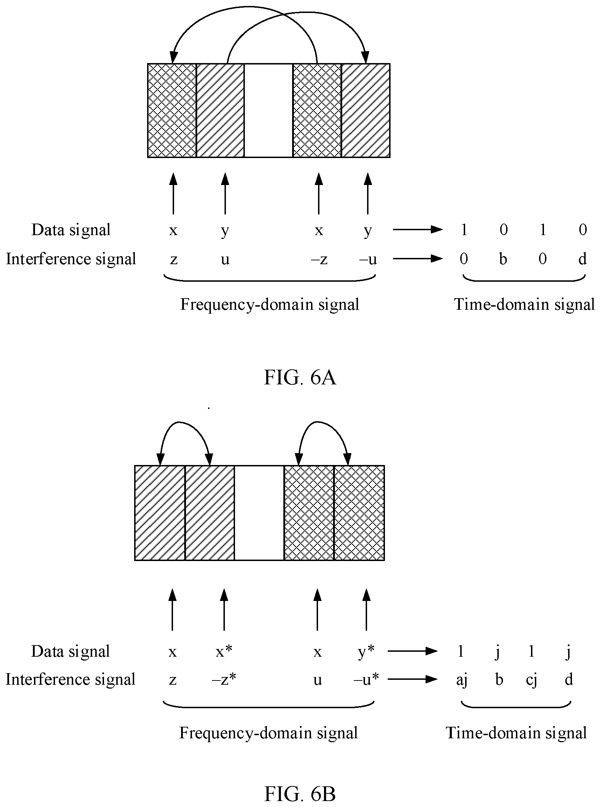

For example, as shown in FIG. 6A, for a QAM signal, a time-domain signal of a data signal is [1 0 1 0].

DFT is performed on [1 0 1 0] to obtain a frequency-domain signal [x y x y].

Therefore, a frequency-domain signal of an interference signal is set to [z u -z -u].

IDFT is performed on the interference signal to obtain a time-domain signal of the interference signal: [0 b 0 d].

Therefore, a superposition result of the time-domain signal of the data signal and the time-domain signal of the interference signal is [(1+0) (0+b) (1+0) (0+d)]. It can be learned that, in the superposition result, when the data signal has a value (for example, 1), the interference signal is 0; and when the data signal is 0, the interference signal has a value (for example, b), and a value of the data signal and a value of the interference signal appear alternately. Therefore, the receiver may separate the data signal from the interference signal by extracting signals at odd-numbered or even-numbered locations.

In an example, for an OQAM modulation scheme, it is assumed that the second frequency-domain signal includes 2N frequency-domain sub-signals, and 2N is a subcarrier quantity corresponding to a transmission bandwidth. In this case, performing extraction on the third time-domain signal to obtain the first time-domain signal includes: extracting real parts of signals at odd-numbered locations in the third time-domain signal, and extracting imaginary parts of signals at even-numbered locations in the third time-domain signal, where the 2N extracted signals form the first time-domain signal; or extracting imaginary parts of signals at odd-numbered locations in the third time-domain signal, and extracting real parts of signals at even-numbered locations in the third time-domain signal, where the 2N extracted signals form the first time-domain signal. It may be understood that whether a data signal at each location in the third time-domain signal is a real number or an imaginary number is related to a constellation diagram used for OQAM modulation, that is, related to whether a first transmit signal predefined for OQAM modulation is a real number or an imaginary number.

For example, as shown in FIG. 6B, for an OQAM signal, it is assumed that a time-domain signal of a data signal is [1 j 1 j].

DFT is performed on [1 j 1 j] to obtain a frequency-domain signal [x x* y y*].

Therefore, a frequency-domain signal of an interference signal is set to [z -z* u u*].

IDFT is performed on the interference signal to obtain a time-domain signal of the interference signal: [aj b cj d].

Therefore, a superposition result of the time-domain signal of the data signal and the time-domain signal of the interference signal is [(1+aj) (j+b) (1+cj) (j+d)]. It can be learned that, in the superposition result, when the data signal is a real number (for example, 1), the interference signal is an imaginary number (for example, aj); and if the data signal is an imaginary number (for example, j), the interference signal is a real number (for example, b). Therefore, the receiver may separate the data signal from the interference signal by extracting an imaginary part or a real part of each signal.

In the foregoing solution, the second communication device may separate a data signal from an interference signal by performing extraction on a time-domain signal, so that communication performance of signals is improved while sensing performance of the signals is improved, thereby better satisfying an ISAC requirement.

The foregoing described solution is to perform interference adding on a frequency-domain sub-signal in different interference adding manners based on different relationships between frequency-domain sub-signals (for example, the first frequency-domain sub-signal and the second frequency-domain sub-signal) in the first frequency-domain signal (for example, when the first frequency-domain sub-signal and the second frequency-domain sub-signal are the same, the first interference signal and the second interference signal are opposite signals to each other; and when the first frequency-domain sub-signal and the second frequency-domain sub-signal are opposite, the first interference signal and the second interference signal are same signals).

In an alternative design manner, a relationship between frequency-domain sub-signals in a frequency-domain signal of a data signal may change through time domain cyclic shift and frequency domain phase shift. For example, cyclic shift processing is performed on the time-domain signal corresponding to the first frequency-domain signal. For example, cyclic shift processing is performed on the first time-domain signal to obtain a second time-domain signal; and then transform domain coding processing (for example, DFT) is performed on the second time-domain signal to obtain the first frequency-domain signal. In this case, after interference adding processing is performed on the first frequency-domain signal according to the foregoing solution to obtain the second frequency-domain signal, phase rotation processing needs to be further performed on the second frequency-domain signal to obtain a third frequency-domain signal, and the third frequency-domain signal is output. The third frequency-domain signal generated in this manner is equivalent to the second frequency-domain signal obtained by directly performing DFT on the first frequency-domain signal and performing interference adding processing according to the foregoing solution on the signal obtained through the DFT.

Optionally, a value of the phase rotation is exp(j*π*k*n), n is an index of a subcarrier location of a frequency-domain sub-signal, and k is a preset rotation phase value.

The following provides two examples for description:

### Example 1

The first time-domain signal is: x = [a₁ a₂ a₃ ... a*_{N}*].

A frequency-domain signal obtained by directly performing DFT on the first time-domain signal is: Y = DFT(x) = [b₁ b₂ b₃ ... b*_{N}*].

Spectrum extension is performed on Y to obtain a frequency-domain signal Z = [b_{*N*-c} b_{*N*-*c*+1} ... b₁ b₂ b₃ ... b*_{N}* b₁ b₂ b₃ ... b*_{c}*].

A replica signal and an original signal corresponding to the replica signal in Z are same signals. For example, a (c+1)^{th} signal and a (c+N+1)^{th} signal in Z are the same and are both b₁.

In this case, opposite interference signals are added to a replica signal whose amplitude is less than the first amplitude threshold in Z and an original signal corresponding to the replica signal, to obtain a frequency-domain signal obtained through interference adding, for example, Q = [b_{*N*-c} b_{*N*-*c*+1} ... (b₁ - z) b₂ b₃ ... b*_{N}* (b₁ + z) b₂ b₃ ... b*_{c}*].

### Example 2

The first time-domain signal is: x = [a₁ a₂ a₃ ... a*_{N}*]*.*

Cyclic shift is performed on the first time-domain signal, for example, moving by one location rightward: x' = [a₂ a₃ ... a*_{N}* a₁].

A frequency-domain signal obtained by performing DFT on x' is: Y' = DFT(x) = [b₁' b₂' b₃' ... b*_{N}*'].

Spectrum extension is performed on Yto obtain a frequency-domain signal Z' = [-b*_{N-c}' -*b_{*N-c*+1}, ... b₁' b₂' b₃' ... b*_{N}*' -b₁' -b₂' -b₃' ... -b*_{c}*'].

Each replica signal in Z' and an original signal corresponding to the replica signal are opposite signals. For example, a (c+1)^{th} signal in Z' is ${b}_{1}^{′}$, and a replica signal of the (c+1)^{th} signal (a (c+N+1)^{th} signal) is $- {b}_{1}^{′}$.

Same interference signals are added to the replica signal in Z' and the original signal corresponding to the replica signal, to obtain a frequency-domain signal obtained through interference adding, for example, $Q ′ = \left[-{b}_{N - c}′ -{b}_{N - c + 1}′ … \left({b}_{1}^{′}+z\right) {b}_{2}′ {b}_{3}′ … {b}_{N}′ \left(-{b}_{1}′+z\right) -{b}_{2}′ -{b}_{3}′ … -{b}_{c}′\right]$ *.*

Phase shift exp(j*π*k*n) is implemented for Q' to obtain a frequency-domain signal Q" = [b_{*N*-c} b_{*N*-*c*+1} ... (b₁ - *z*) b₂ b₃ ... b*_{N}* (b₁ + z) b₂ b₃ ... b*_{c}*].

It can be learned by comparing Example 1 with Example 2 that "the first frequency-domain sub-signal and the second frequency-domain sub-signal are the same, and the first interference signal and the second interference signal are opposite signals to each other" may be converted to "the first frequency-domain sub-signal and the second frequency-domain sub-signal are opposite, and the first interference signal and the second interference signal are same signals" through time domain cyclic shift and frequency domain phase shift processing, or "the first frequency-domain sub-signal and the second frequency-domain sub-signal are opposite, and the first interference signal and the second interference signal are same signals" may be converted to "the first frequency-domain sub-signal and the second frequency-domain sub-signal are the same, and the first interference signal and the second interference signal are opposite signals to each other" through time domain cyclic shift and frequency domain phase shift.

According to the foregoing design, for the same signal, an interference adding manner of the signal in frequency domain may be changed through time domain cyclic shift and frequency domain phase shift, to improve flexibility of the interference adding manner; and for different signals, interference adding manners of the different signals in frequency domain may be the same through time domain cyclic shift and frequency domain phase shift, to reduce interference adding complexity.

In a possible design, interference adding may be performed on only a part of frequency-domain sub-signals in the first frequency-domain signal in the foregoing manner. For example, the first frequency-domain signal includes M frequency-domain sub-signals, and M is a positive integer. The M frequency-domain sub-signals include X pairs of frequency-domain sub-signals. Each pair of frequency-domain sub-signals in the X pairs of frequency-domain sub-signals includes two frequency-domain sub-signals. Each pair of frequency-domain sub-signals in the X pairs of frequency-domain sub-signals satisfy that the frequency-domain sub-signals are the same, opposite, conjugate, or conjugate opposite. Subcarrier locations of each pair of frequency-domain sub-signals in the X pairs of frequency-domain sub-signals satisfy the foregoing preset relationship. In this case, interference adding processing may be performed on the P pairs of frequency-domain sub-signals in the first frequency-domain signal. Herein, $\frac{P}{X}$ or P is a preset value, and P is a positive integer less than or equal to X.

In specific implementation, $\frac{P}{X}$ or P may be specified in a protocol, agreed on by a system, or configured by a network device. This is not limited in this embodiment of this application.

In a possible example, when a modulation scheme is QAM, interference adding may be performed on only replica signals of a spectrum extension part and original signals corresponding to the signals. For example, if a subcarrier quantity corresponding to the original bandwidth is N, a subcarrier quantity corresponding to the extended bandwidth is 2c, and the transmission bandwidth is M = N + 2c. Interference adding is performed on 2c subcarriers of spectrum extension and original signals (also 2c subcarriers) corresponding to these signals, that is, 4c subcarriers in total.

In this way, an interference adding processing amount can be reduced as much as possible while sensing performance and communication performance of signals are improved, thereby reducing an interference adding workload of a transmitter and an interference cancellation workload of a receiver, to reduce device power consumption.

In a possible design, the solutions of S101 to S103 and S201 to S203 may be implemented when one or more of the following conditions are satisfied:
(1) The first amplitude threshold reaches or exceeds a first value.
(2) An index of a modulation and coding scheme (modulation and coding scheme, MCS) corresponding to the first frequency-domain signal reaches or exceeds a second value.
(3) A code rate corresponding to the first frequency-domain signal reaches or exceeds a third value.
(4) A modulation order corresponding to the first frequency-domain signal reaches or exceeds a fourth value.

The first value, the second value, the third value, the fourth value, or the like may be specified in a protocol, agreed on by a system, or configured by a network device. This is not limited in this embodiment of this application.

In this way, the foregoing solution can be used for interference adding only when a channel condition is relatively good, to ensure both sensing performance and communication performance of signals.

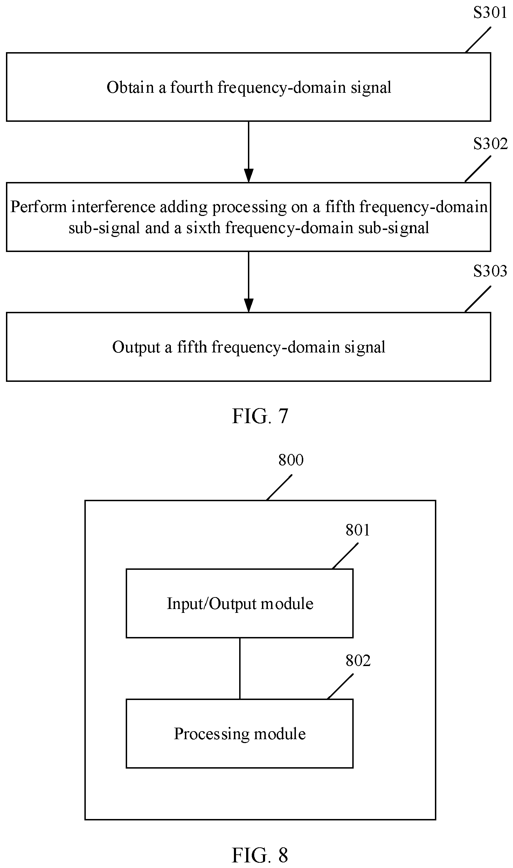

In a possible design, this application further provides a signal processing method. With reference to FIG. 7, the method includes the following steps.

S301: Obtain a fourth frequency-domain signal, where the fourth frequency-domain signal includes a fifth frequency-domain sub-signal and a sixth frequency-domain sub-signal, the fifth frequency-domain sub-signal is at a third subcarrier location, the sixth frequency-domain sub-signal is at a fourth subcarrier location, and the third subcarrier location and the fourth subcarrier location satisfy a preset relationship.

S302: Perform interference adding processing on the fifth frequency-domain sub-signal and the sixth frequency-domain sub-signal to obtain a fifth frequency-domain signal, where the fifth frequency-domain signal includes a seventh frequency-domain sub-signal and an eighth frequency-domain sub-signal, the seventh frequency-domain sub-signal is obtained by adding a third interference signal to the fifth frequency-domain sub-signal, and the eighth frequency-domain sub-signal is obtained by adding a fourth interference signal to the sixth frequency-domain sub-signal.

S303: Output the fifth frequency-domain signal.

The fifth frequency-domain sub-signal and the sixth frequency-domain sub-signal are the same, and the third interference signal and the fourth interference signal are the same.

Optionally, interference adding is performed only when the frequency-domain sub-signals in the fourth frequency-domain signal are less than a second amplitude threshold. Correspondingly, an amplitude of the fifth frequency-domain sub-signal and/or an amplitude of the sixth frequency-domain sub-signal are/is less than or do/does not exceed the second amplitude threshold.

Optionally, when one or more of the following conditions are satisfied, the method in S301 to S303 is performed:
(1) The second amplitude threshold may be less than or equal to a fifth value.
(2) An index of an MCS corresponding to the fourth frequency-domain signal is less than or does not exceed a sixth value.
(3) A code rate corresponding to the fourth frequency-domain signal is less than or does not exceed a seventh value.
(4) A modulation order corresponding to the fourth frequency-domain signal is less than or does not exceed an eighth value.

The fifth value, the sixth value, the seventh value, the eighth value, or the like may be specified in a protocol, agreed on by a system, or configured by a network device. This is not limited in this embodiment of this application.

In this way, when a channel condition is relatively poor, interference adding may be performed by using a floor clipping solution, to ensure better communication performance when sensing performance is fixed.

In combination with S101 to S103 and S301 to S303, different interference adding solutions can be flexibly used in different scenarios, to ensure that sensing performance and communication performance in various scenarios can achieve optimal effect in the scenarios.

It may be understood that the foregoing implementations may be separately independently implemented, or may be implemented in combination with each other. This is not limited.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus 800. The apparatus 800 may be, for example, a satellite, a base station, a terminal, an access point, or a chip inside a satellite, a base station, a terminal, or an access point. The apparatus 800 includes corresponding modules, units, or means (means) for performing the method steps in the foregoing method embodiments. The functions, units, or means may be implemented by software, may be implemented by hardware, or may be implemented by hardware executing corresponding software.

For example, with reference to FIG. 8, the apparatus 800 may include an input/output module 801 and a processing module 802.

When the apparatus 800 is located in a first communication device:
the processing module 802 is configured to: obtain a first frequency-domain signal, where the first frequency-domain signal includes a plurality of frequency-domain sub-signals, the plurality of frequency-domain sub-signals include a first frequency-domain sub-signal and a second frequency-domain sub-signal, the first frequency-domain sub-signal is at a first subcarrier location, the second frequency-domain sub-signal is at a second subcarrier location, and the first subcarrier location and the second subcarrier location satisfy a preset relationship; and perform interference adding processing on the first frequency-domain sub-signal and the second frequency-domain sub-signal to obtain a second frequency-domain signal, where the second frequency-domain signal includes a third frequency-domain sub-signal and a fourth frequency-domain sub-signal, the third frequency-domain sub-signal is obtained by adding a first interference signal to the first frequency-domain sub-signal, and the fourth frequency-domain sub-signal is obtained by adding a second interference signal to the second frequency-domain sub-signal; and
the input/output module 801 is configured to output the second frequency-domain signal.

The first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

In a possible design, the processing module 802 is configured to:
if the first frequency-domain sub-signal and the second frequency-domain sub-signal are the same, or the first frequency-domain sub-signal and the second frequency-domain sub-signal are opposite, perform interference adding processing on the first frequency-domain sub-signal and the second frequency-domain sub-signal when an amplitude of the first frequency-domain sub-signal or the second frequency-domain sub-signal is less than a first amplitude threshold; or
if the first frequency-domain sub-signal and the second frequency-domain sub-signal are conjugate, or the first frequency-domain sub-signal and the second frequency-domain sub-signal are conjugate opposite, perform interference adding processing on the first frequency-domain sub-signal and the second frequency-domain sub-signal when amplitudes of the first frequency-domain sub-signal and the second frequency-domain sub-signal are less than a first amplitude threshold.

In a possible design, the processing module 802 is configured to:
perform cyclic shift processing on a first time-domain signal to obtain a second time-domain signal, and perform transform domain coding processing on the second time-domain signal to obtain the first frequency-domain signal.

The processing module 802 is further configured to:
perform phase rotation processing on the second frequency-domain signal to obtain a third frequency-domain signal, where a value of the phase rotation is exp(j*π*k*n), n is an index of a subcarrier location of a frequency-domain sub-signal, and k is a preset rotation phase value.

The input/output module 801 is further configured to output the third frequency-domain signal.

In a possible design, the first frequency-domain sub-signal and the second frequency-domain sub-signal are the same or opposite, and the preset relationship is that the first subcarrier location and the second subcarrier location are spaced by N subcarriers, where N is a subcarrier quantity corresponding to an original bandwidth.

In a possible design, the first subcarrier location is in the original bandwidth, and the second subcarrier location is in an extended bandwidth.

In a possible design, the first frequency-domain sub-signal and the second frequency-domain sub-signal are conjugate or conjugate opposite, and the preset relationship is that the first subcarrier location and the second subcarrier location are symmetric with respect to a (N/4)^{th} subcarrier location or a (3N/4)^{th} subcarrier location, where N is a subcarrier quantity corresponding to a transmission bandwidth.

In a possible design, the processing module 802 is further configured to obtain the first amplitude threshold.

In a possible design, the processing module 802 is further configured to determine the first interference signal and the second interference signal based on the first amplitude threshold, the first frequency-domain sub-signal, and the second frequency-domain sub-signal.

In a possible design, the first frequency-domain sub-signal and the second frequency-domain sub-signal are conjugate.

The first amplitude threshold, the first frequency-domain sub-signal, and the first interference signal satisfy the following relationships: $real \left(z\right) = - \frac{imag \left(x\right)}{real \left(x\right)} imag \left(z\right) ;$ and $imag \left(z\right) = \pm \frac{\left|real\left(x\right)\right|}{\left|x\right|} \sqrt{{Th}^{2} - {x}^{2}} .$

Herein, *x* represents the first frequency-domain sub-signal, *z* represents the first interference signal, Th represents the first amplitude threshold, *real*(*z*) represents a real part of the first interference signal, *real*(*z*) represents an imaginary part of the first interference signal, *real*(*x*) represents a real part of the first frequency-domain sub-signal, and *imag*(*x*) represents an imaginary part of the first frequency-domain sub-signal.

In a possible design, the first frequency-domain sub-signal and the second frequency-domain sub-signal are the same.

The first amplitude threshold, the first frequency-domain sub-signal, the second frequency-domain sub-signal, the first interference signal, and the second interference signal satisfy the following relationships: $\left|x+z\right| \geq = Th ;$ and $\left|y-z\right| \geq = Th .$

Herein, *x* represents the first frequency-domain sub-signal, *z* represents the first interference signal, *y* represents the second frequency-domain sub-signal, and -*z* represents the second interference signal.

In a possible design, the first frequency-domain signal includes M frequency-domain sub-signals, M is a positive integer, and X pairs of frequency-domain sub-signals in the M frequency-domain sub-signals satisfy that the frequency-domain sub-signals are the same, opposite, conjugate, or conjugate opposite.

The processing module 802 is further configured to perform interference adding processing on P pairs of frequency-domain sub-signals in the first frequency-domain signal, where $\frac{P}{X}$ or P is a preset value, and P is a positive integer less than or equal to X.

In a possible design, the first amplitude threshold reaches or exceeds a first value.

In a possible design, an index of an MCS corresponding to the first frequency-domain signal reaches or exceeds a second value.

In a possible design, a code rate corresponding to the first frequency-domain signal reaches or exceeds a third value.

In a possible design, a modulation order corresponding to the first frequency-domain signal reaches or exceeds a fourth value.

In a possible design, the processing module 802 is configured to:
perform quadrature amplitude modulation QAM processing on to-be-transmitted information bits to obtain the first time-domain signal, perform transform domain coding on the first time-domain signal to obtain the third frequency-domain signal, and perform spectrum extension processing on the third frequency-domain signal to obtain the first frequency-domain signal, where the first frequency-domain sub-signal and the second frequency-domain sub-signal are the same or opposite; or
perform offset quadrature amplitude modulation OQAM processing on to-be-transmitted information bits to obtain the first time-domain signal, and perform transform domain coding on the first time-domain signal to obtain the first frequency-domain signal, where the first frequency-domain sub-signal and the second frequency-domain sub-signal are conjugate or conjugate opposite.

In a possible design, the processing module 802 is further configured to:
obtain a fourth frequency-domain signal, where the fourth frequency-domain signal includes a fifth frequency-domain sub-signal and a sixth frequency-domain sub-signal, the fifth frequency-domain sub-signal is at a third subcarrier location, the sixth frequency-domain sub-signal is at a fourth subcarrier location, and the third subcarrier location and the fourth subcarrier location satisfy the preset relationship; and
perform interference adding processing on the fifth frequency-domain sub-signal and the sixth frequency-domain sub-signal to obtain a fifth frequency-domain signal, where the fifth frequency-domain signal includes a seventh frequency-domain sub-signal and an eighth frequency-domain sub-signal, the seventh frequency-domain sub-signal is obtained by adding a third interference signal to the fifth frequency-domain sub-signal, and the eighth frequency-domain sub-signal is obtained by adding a fourth interference signal to the sixth frequency-domain sub-signal.

The input/output module 801 is further configured to output the fifth frequency-domain signal.

In a possible design, the third interference signal and the fourth interference signal are the same.

In a possible design, an amplitude of the fifth frequency-domain sub-signal and/or an amplitude of the sixth frequency-domain sub-signal are/is less than or do/does not exceed a second amplitude threshold, and the second amplitude threshold is less than a fifth value.

In a possible design, an index of an MCS corresponding to the fourth frequency-domain signal is less than or does not exceed a sixth value.

In a possible design, a code rate corresponding to the fourth frequency-domain signal is less than or does not exceed a seventh value.

In a possible design, a modulation order corresponding to the fourth frequency-domain signal is less than or does not exceed an eighth value.

When the apparatus 800 is located in a second communication device:
the input/output module 801 is configured to receive a first signal, where the first signal carries a second frequency-domain signal, the second frequency-domain signal includes a third frequency-domain sub-signal and a fourth frequency-domain sub-signal, the third frequency-domain sub-signal is obtained by adding a first interference signal to the first frequency-domain sub-signal, the fourth frequency-domain sub-signal is obtained by adding a second interference signal to the second frequency-domain sub-signal, the first frequency-domain sub-signal is at a first subcarrier location, the second frequency-domain sub-signal is at a second subcarrier location, and the first subcarrier location and the second subcarrier location satisfy a preset relationship; and
the processing module 802 is configured to perform transform domain coding processing on the second frequency-domain signal to obtain a third time-domain signal; and perform extraction on the third time-domain signal to obtain a first time-domain signal.

The first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

In a possible design, the second frequency-domain signal includes M frequency-domain sub-signals, M is a length of a transmission bandwidth, and M is a positive integer.

The processing module 802 is further configured to: before performing transform domain coding processing on the second frequency-domain signal, perform zero padding on the second frequency-domain signal to obtain a padded second frequency-domain signal, where the padded second frequency-domain signal includes 2N frequency-domain sub-signals, 2N is a positive integer greater than M, N is a subcarrier quantity corresponding to an original bandwidth, and N is a positive integer less than or equal to M.

The processing module 802 is configured to extract signals at odd-numbered or even-numbered locations from the 2N frequency-domain sub-signals, where the N extracted signals form the first time-domain signal.

In a possible design, the second frequency-domain signal includes 2N frequency-domain sub-signals, and 2N is a subcarrier quantity corresponding to a transmission bandwidth.

The processing module 802 is configured to: extract real parts of signals at odd-numbered locations in the third time-domain signal, and extract imaginary parts of signals at even-numbered locations in the third time-domain signal, where the 2N extracted signals form the first time-domain signal; or extract imaginary parts of signals at odd-numbered locations in the third time-domain signal, and extract real parts of signals at even-numbered locations in the third time-domain signal, where the 2N extracted signals form the first time-domain signal.

It should be understood that all related content of the steps in the foregoing method embodiments may be cited in function descriptions of a corresponding functional module. Details are not described herein again.

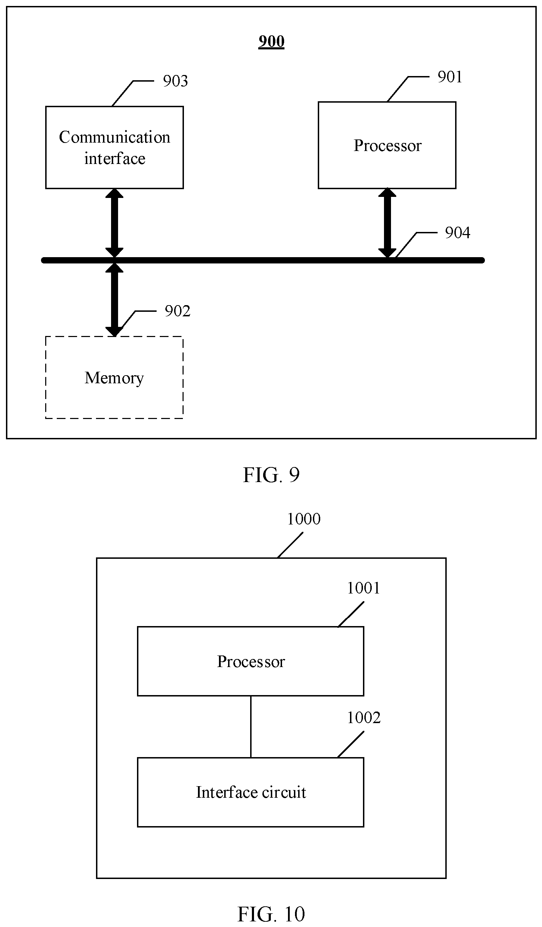

Based on a same technical concept, an embodiment of this application further provides a communication apparatus 900. With reference to FIG. 9, the communication apparatus 900 includes:
at least one processor 901 and a communication interface 903 that is communicatively connected to the at least one processor 901, where the at least one processor 901 executes instructions stored in a memory 902, so that the communication apparatus 900 is enabled to perform the method steps in the foregoing method embodiments through the communication interface 903.

Optionally, the memory 902 is located outside the communication apparatus 900.

Optionally, the communication apparatus 900 includes the memory 902, the memory 902 is connected to the at least one processor 901, and the memory 902 stores the instructions that can be executed by the at least one processor 901. In FIG. 9, a dashed line is used for indicating that the memory 902 is optional for the apparatus 900.

The processor 901 and the memory 902 may be coupled by using an interface circuit, or may be integrated together. This is not limited herein.

A specific connection medium between the processor 901, the memory 902, and the communication interface 903 is not limited in embodiments of this application. In embodiments of this application, in FIG. 9, the processor 901, the memory 902, and the communication interface 903 are connected through a bus 904. The bus is represented by a thick line in FIG. 9. A manner of connection between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus.

A specific connection medium between the processor 901, the memory 902, and the communication interface 903 is not limited in embodiments of this application. In embodiments of this application, in FIG. 9, the processor 901, the memory 902, and the communication interface 903 are connected through a bus 904. The bus is represented by a thick line in FIG. 9. A manner of connection between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus.

Based on a same technical concept, an embodiment of this application further provides a communication apparatus 1000. With reference to FIG. 10, the communication apparatus 1000 includes a processor 1001 and an interface circuit 1002. The interface circuit 1002 is electrically coupled to the processor 1001. The processor 1001 performs the method steps in the foregoing method embodiments by using a logic circuit or by executing code instructions. Optionally, the communication apparatus 1000 further includes the memory.

It should be understood that, the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is the general-purpose processor, the DSP, the ASIC, the FPGA or another programmable logic device, the discrete gate or the transistor logic device, or the discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method in the foregoing method embodiments is performed.

Based on a same technical concept, an embodiment of this application further provides a computer program product, including instructions. When the instructions are run on a computer, the method in the foregoing method embodiments is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A signal processing method, wherein the method comprises:
obtaining a first frequency-domain signal, wherein the first frequency-domain signal comprises a plurality of frequency-domain sub-signals, the plurality of frequency-domain sub-signals comprise a first frequency-domain sub-signal and a second frequency-domain sub-signal, the first frequency-domain sub-signal is at a first subcarrier location, the second frequency-domain sub-signal is at a second subcarrier location, and the first subcarrier location and the second subcarrier location satisfy a preset relationship;
performing interference adding processing on the first frequency-domain sub-signal and the second frequency-domain sub-signal to obtain a second frequency-domain signal, wherein the second frequency-domain signal comprises a third frequency-domain sub-signal and a fourth frequency-domain sub-signal, the third frequency-domain sub-signal is obtained by adding a first interference signal to the first frequency-domain sub-signal, and the fourth frequency-domain sub-signal is obtained by adding a second interference signal to the second frequency-domain sub-signal; and
outputting the second frequency-domain signal, wherein
the first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

2. The method according to claim 1, wherein performing interference adding processing on the first frequency-domain sub-signal and the second frequency-domain sub-signal to obtain the second frequency-domain signal comprises:
if the first frequency-domain sub-signal and the second frequency-domain sub-signal are the same, or the first frequency-domain sub-signal and the second frequency-domain sub-signal are opposite, performing interference adding processing on the first frequency-domain sub-signal and the second frequency-domain sub-signal when an amplitude of the first frequency-domain sub-signal or the second frequency-domain sub-signal is less than a first amplitude threshold; or
if the first frequency-domain sub-signal and the second frequency-domain sub-signal are conjugate, or the first frequency-domain sub-signal and the second frequency-domain sub-signal are conjugate opposite, performing interference adding processing on the first frequency-domain sub-signal and the second frequency-domain sub-signal when amplitudes of the first frequency-domain sub-signal and the second frequency-domain sub-signal are less than a first amplitude threshold.

3. The method according to claim 1 or 2, wherein obtaining the first frequency-domain signal comprises:
performing cyclic shift processing on a first time-domain signal to obtain a second time-domain signal, and performing transform domain coding processing on the second time-domain signal to obtain the first frequency-domain signal; and
the method further comprises:
performing phase rotation processing on the second frequency-domain signal to obtain a third frequency-domain signal, wherein a value of the phase rotation is exp(j*π*k*n), n is an index of a subcarrier location of a frequency-domain sub-signal, and k is a preset rotation phase value; and
outputting the third frequency-domain signal.

4. The method according to any one of claims 1 to 3, wherein the first frequency-domain sub-signal and the second frequency-domain sub-signal are the same or opposite, and the preset relationship is that the first subcarrier location and the second subcarrier location are spaced by N subcarriers, wherein N is a subcarrier quantity corresponding to an original bandwidth.

5. The method according to claim 4, wherein the first subcarrier location is in the original bandwidth, and the second subcarrier location is in an extended bandwidth.

6. The method according to any one of claims 1 to 3, wherein the first frequency-domain sub-signal and the second frequency-domain sub-signal are conjugate or conjugate opposite, and the preset relationship is that the first subcarrier location and the second subcarrier location are symmetric with respect to a (N/4)^{th} subcarrier location or a (3N/4)^{th} subcarrier location, wherein N is a subcarrier quantity corresponding to a transmission bandwidth.

7. The method according to claim 2, wherein the method further comprises:
obtaining the first amplitude threshold.

8. The method according to claim 2 or 7, wherein the method further comprises:
determining the first interference signal and the second interference signal based on the first amplitude threshold, the first frequency-domain sub-signal, and the second frequency-domain sub-signal.

9. The method according to any one of claims 1 to 8, wherein the first frequency-domain signal comprises M frequency-domain sub-signals, M is a positive integer, and X pairs of frequency-domain sub-signals in the M frequency-domain sub-signals satisfy that the frequency-domain sub-signals are the same, opposite, conjugate, or conjugate opposite; and
the method further comprises:
performing interference adding processing on P pairs of frequency-domain sub-signals in the first frequency-domain signal, wherein $\frac{P}{X}$ or P is a preset value, and P is a positive integer less than or equal to X.

10. The method according to claim 2, 7, or 8, wherein the first amplitude threshold reaches or exceeds a first value.

11. The method according to any one of claims 1 to 10, wherein an index of a modulation and coding scheme MCS corresponding to the first frequency-domain signal reaches or exceeds a second value.

12. The method according to any one of claims 1 to 11, wherein a code rate corresponding to the first frequency-domain signal reaches or exceeds a third value.

13. The method according to any one of claims 1 to 12, wherein a modulation order corresponding to the first frequency-domain signal reaches or exceeds a fourth value.

14. The method according to any one of claim 1 to 13, wherein obtaining the first frequency-domain signal comprises:
performing quadrature amplitude modulation QAM processing on to-be-transmitted information bits to obtain the first time-domain signal, performing transform domain coding on the first time-domain signal to obtain the third frequency-domain signal, and performing spectrum extension processing on the third frequency-domain signal to obtain the first frequency-domain signal, wherein the first frequency-domain sub-signal and the second frequency-domain sub-signal are the same or opposite; or
performing offset quadrature amplitude modulation OQAM processing on to-be-transmitted information bits to obtain the first time-domain signal, and performing transform domain coding on the first time-domain signal to obtain the first frequency-domain signal, wherein the first frequency-domain sub-signal and the second frequency-domain sub-signal are conjugate or conjugate opposite.

15. The method according to any one of claims 1 to 14, wherein the method further comprises:
obtaining a fourth frequency-domain signal, wherein the fourth frequency-domain signal comprises a fifth frequency-domain sub-signal and a sixth frequency-domain sub-signal, the fifth frequency-domain sub-signal is at a third subcarrier location, the sixth frequency-domain sub-signal is at a fourth subcarrier location, and the third subcarrier location and the fourth subcarrier location satisfy the preset relationship;
performing interference adding processing on the fifth frequency-domain sub-signal and the sixth frequency-domain sub-signal to obtain a fifth frequency-domain signal, wherein the fifth frequency-domain signal comprises a seventh frequency-domain sub-signal and an eighth frequency-domain sub-signal, the seventh frequency-domain sub-signal is obtained by adding a third interference signal to the fifth frequency-domain sub-signal, and the eighth frequency-domain sub-signal is obtained by adding a fourth interference signal to the sixth frequency-domain sub-signal; and
outputting the fifth frequency-domain signal, wherein
the fifth frequency-domain sub-signal and the sixth frequency-domain sub-signal are the same, and the third interference signal and the fourth interference signal are the same.

16. The method according to claim 15, wherein an amplitude of the fifth frequency-domain sub-signal and/or an amplitude of the sixth frequency-domain sub-signal are/is less than or do/does not exceed a second amplitude threshold, and the second amplitude threshold is less than a fifth value.

17. The method according to any one of claims 1 to 16, wherein an index of an MCS corresponding to the fourth frequency-domain signal is less than or does not exceed a sixth value.

18. The method according to any one of claims 1 to 17, wherein a code rate corresponding to the fourth frequency-domain signal is less than or does not exceed a seventh value.

19. The method according to any one of claims 1 to 18, wherein a modulation order corresponding to the fourth frequency-domain signal is less than or does not exceed an eighth value.

20. A signal processing method, comprising:
receiving a first signal, wherein the first signal carries a second frequency-domain signal, the second frequency-domain signal comprises a third frequency-domain sub-signal and a fourth frequency-domain sub-signal, the third frequency-domain sub-signal is obtained by adding a first interference signal to the first frequency-domain sub-signal, the fourth frequency-domain sub-signal is obtained by adding a second interference signal to the second frequency-domain sub-signal, the first frequency-domain sub-signal is at a first subcarrier location, the second frequency-domain sub-signal is at a second subcarrier location, and the first subcarrier location and the second subcarrier location satisfy a preset relationship;
performing transform domain coding processing on the second frequency-domain signal to obtain a third time-domain signal; and
performing extraction on the third time-domain signal to obtain a first time-domain signal, wherein
the first frequency-domain sub-signal and the second frequency-domain sub-signal are the same, and the first interference signal and the second interference signal are opposite signals to each other; or the first frequency-domain sub-signal and the second frequency-domain sub-signal are opposite, and the first interference signal and the second interference signal are same signals; or the first frequency-domain sub-signal and the second frequency-domain sub-signal are conjugate, and the first interference signal and the second interference signal are conjugate opposite signals to each other; or the first frequency-domain sub-signal and the second frequency-domain sub-signal are conjugate opposite, and the first interference signal and the second interference signal are conjugate signals to each other.

21. The method according to claim 20, wherein the second frequency-domain signal comprises M frequency-domain sub-signals, M is a length of a transmission bandwidth, and M is a positive integer;
the method further comprises:
before performing transform domain coding processing on the second frequency-domain signal, performing zero padding on the second frequency-domain signal to obtain a padded second frequency-domain signal, wherein the padded second frequency-domain signal comprises 2N frequency-domain sub-signals, 2N is a positive integer greater than M, N is a subcarrier quantity corresponding to an original bandwidth, and N is a positive integer less than or equal to M; and
performing extraction on the third time-domain signal to obtain the first time-domain signal comprises:
extracting signals at odd-numbered or even-numbered locations from the 2N frequency-domain sub-signals, wherein the N extracted signals form the first time-domain signal.

22. The method according to claim 21, wherein the second frequency-domain signal comprises 2N frequency-domain sub-signals, and 2N is a subcarrier quantity corresponding to a transmission bandwidth; and
performing extraction on the third time-domain signal to obtain the first time-domain signal comprises:
extracting real parts of signals at odd-numbered locations in the third time-domain signal, and extracting imaginary parts of signals at even-numbered locations in the third time-domain signal, wherein the 2N extracted signals form the first time-domain signal; or
extracting imaginary parts of signals at odd-numbered locations in the third time-domain signal, and extracting real parts of signals at even-numbered locations in the third time-domain signal, wherein the 2N extracted signals form the first time-domain signal.

23. A communication apparatus, comprising a processor and an interface circuit, wherein the interface circuit is electrically coupled to the processor, and the processor performs, by using a logic circuit or by executing code instructions, the method according to any one of claims 1 to 19 or the method according to any one of claims 20 to 22.

24. A computer-readable storage medium, wherein the storage medium stores a computer program or instructions, and when the computer program or the instructions are run, the method according to any one of claims 1 to 19 or the method according to any one of claims 20 to 22 is performed.

25. A computer program product, comprising instructions, wherein when the instructions are run on a computer, the method according to any one of claims 1 to 19 or the method according to any one of claims 20 to 22 is performed.

26. A communication system, comprising:
a first communication apparatus, configured to perform the method according to any one of claims 1 to 19; and
a second communication apparatus, configured to perform the method according to any one of claims 20 to 22.
